# DEMANDE DE BREVET EUROPEEN

(11) **EP 1 323 904 A1**
(43) Date de publication de la demande: **02.07.2003**
(21) Numéro de dépôt: 02293192.7
(22) Date de dépôt: 20.12.2002
(51) Int. Cl.: F01N 9/00, F01N 11/00, F01N 3/023, F01N 3/035, F01N 3/08

(54) **Procédé de détection de la régénération incontrolée d'un filtre à particules implanté dans la ligne d'échappement d'un moteur à combustion interne**

(30) Priorité: 26.12.2001 FR 0116868
(71) Demandeur: Renault s.a.s., 92100 Boulogne Billancourt (FR)
(72) Inventeur: Bonfand, Isabelle, 91230 Montgeron (FR); Bourret, Stéphane, 91620 La Ville du Bois (FR); Leprieur, Laurent, 91470 Limours (FR); Meurisse, Olivier, 92160 Antony (FR)

(57) **Abrégé**

La présente invention concerne un procédé de détection de la régénération incontrôlée d'un filtre à particules implanté dans la ligne d'échappement d'un moteur à combustion interne, intervenant notamment lorsque la quantité de suies stockées dans ledit filtre est importante, dans lequel on détermine la quantité d'oxygène présent dans les gaz d'échappement en amont et en aval de ce filtre, on calcule la consommation d'oxygène due à la combustion des suies, et on compare cette consommation d'oxygène à un seuil pour déclarer le caractère violent ou non de la régénération.

## Description

### DOMAINE TECHNIQUE

La présente invention concerne un procédé de détection de la régénération incontrôlée d'un filtre à particules, implanté dans la ligne d'échappement d'un moteur à combustion interne, intervenant lorsque la quantité de suies stockées dans celui-ci est importante.

### ETAT DE LA TECHNIQUE ANTERIEURE

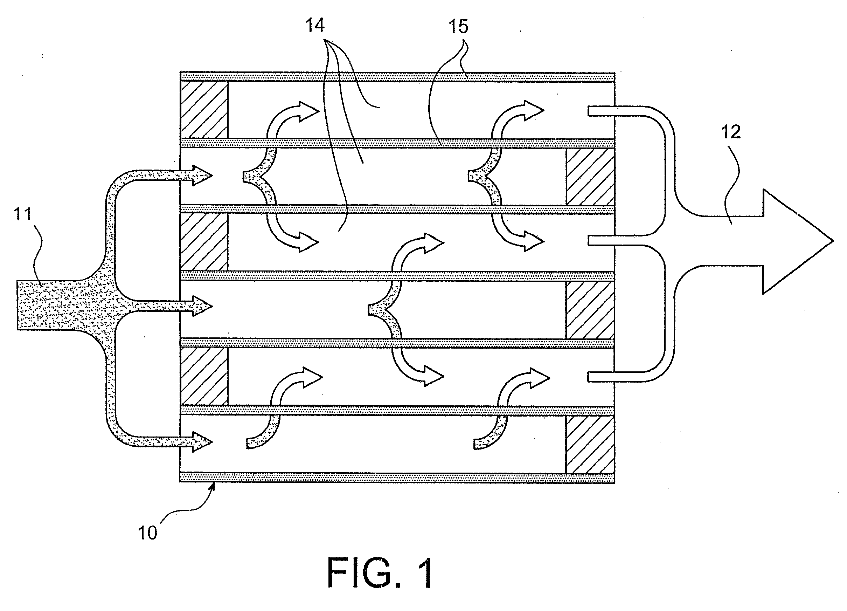

Les normes concernant la pollution et la consommation des moteurs à combustion interne équipant les véhicules deviennent de plus en plus sévères dans l'ensemble des pays industrialisés. Parmi les systèmes connus pour éliminer les particules de suies émises par les moteurs à combustion interne, on peut citer les filtres à particules insérés dans les lignes d'échappement de ces moteurs. Ces filtres sont adaptés pour piéger les particules de suies contenues dans les gaz d'échappement. Comme illustré sur la figure 1, avec son flux de gaz d'échappement entrant 11 et son flux de gaz d'échappement sortant 12, un filtre 10 de ce type comporte plusieurs canaux 14 aux parois poreuses 15.

Des dispositifs de régénération permettent de brûler périodiquement les particules piégées dans les filtres et éviter le colmatage de ces derniers. Les particules de suie, en effet, brûlent à des températures de l'ordre de 550°C à 600°C. De tels niveaux thermiques ne sont que rarement atteints par les gaz d'échappement d'un moteur diesel automobile puisque, par exemple en ville, la température des gaz d'échappement évolue entre 150°C et 250°C.

La mise en oeuvre de tels systèmes d'aide à la régénération est pilotée par un système électronique de commande qui détermine en fonction d'un certain nombre de paramètres et notamment le chargement du filtre à particules, l'instant de la régénération.

Ainsi, le document référencé [1] en fin de description, divulgue un tel système de gestion du fonctionnement d'un filtre à particules associé à un moteur diesel de véhicule automobile, et décrit comment la mise en action des moyens d'aide à la régénération est déclenchée dès lors que la masse de suie dans le filtre est supérieure à une valeur de seuil, cette masse de suie étant déterminée à partir de la mesure de la perte de charge aux bornes du filtre à particules et des conditions de fonctionnement du moteur.

Toutefois, il peut apparaître un dysfonctionnement dans l'estimation de la masse de suies dans le filtre à particules suite à une information de pression différentielle erronée qui peut être due à un capteur en panne, une dérive du signal, des fuites, un encrassement ou des conditions de roulage non suffisantes. Le filtre à particules peut alors ne pas être régénéré au bon moment et la masse de suies stockées dans celui-ci être trop importante.

Ce dysfonctionnement peut, de ce fait, avoir des conséquences fâcheuses. En effet, des conditions de roulage avec une thermique échappement élevée, avec ou sans artifice contrôle moteur, peuvent alors initier la régénération. Mais cette régénération peut présenter un comportement incontrôlé du fait d'une quantité importante de suies dans les canaux du filtre à particules, ce comportement incontrôlé se caractérisant par un emballement de la régénération.

Un tel emballement peut se produire lorsque les conditions de roulage du véhicule imposent au moteur un fonctionnement synonyme d'une quantité importante d'oxygène dans les gaz à la sortie des cylindres (retour au ralenti ou lâché de pied par exemple). En effet, une concentration élevée d'oxygène en amont du filtre à particules se traduit par une cinétique de réaction d'oxydation des suies rapide, qui conjuguée à une masse de suies importante déclenche l'emballement de la régénération du filtre à particules.

Un tel emballement génère une exothermicité interne au filtre à particules très supérieure à celle d'une régénération "normale", par exemple supérieure à 750°C, qui va dégrader irréversiblement le milieu filtrant et opérer des fissures dans les parois poreuses des canaux du filtre ; qui a pour effet immédiat une baisse de l'efficacité de filtration du filtre à particules.

Les parois du filtre à particules peuvent être imprégnées d'une phase catalytique à base de métaux précieux permettant l'oxydation des hydrocarbures imbrûlés HC du monoxyde de carbone CO. Une régénération incontrôlée génère un vieillissement thermique accéléré de cette phase catalytique et l'efficacité de conversion des HC et du CO, de ce fait, diminue.

Le filtre à particules peut, de plus, inclure une structure de piégeage des hydrocarbures à froid, notamment à base de zéolites, en attendant l'amorçage des réactions d'oxydation catalysée par les métaux précieux. Dans ce cas, un tel emballement peut faire chuter l'efficacité de stockage du piège à hydrocarbures en détruisant les zéolites.

Différents documents de l'art connu utilisent une mesure de pression amont-aval aux bornes du filtre à particules, une mesure de l'exothermicité aux bornes dudit filtre, ou un traitement de l'information température aval pour piloter une régénération "douce" d'un filtre à particules surchargé permettant d'éviter de détruire celui-ci.

Le document référencé [2] utilise ainsi une pompe à air pour ajuster la quantité d'oxygène en amont du filtre à particules lors d'une régénération et pour refroidir le filtre à particules en cas de régénération violente.

Les documents référencés [3] et [4] utilisent un chauffage électrique pour ajuster la thermique en amont ou à l'intérieur du filtre à particules pour brûler les suies et éviter l'existence d'une trop grande quantité de particules localement dans le filtre à particules.

Le document référencé [5] décrit une pompe à air couplée à un chauffage électrique pour piloter une régénération sans dégrader le filtre à particules.

Le document référencé [6] reprend le principe du traitement de l'information température aval pour détecter une régénération trop chaude et l'étouffer par l'utilisation d'un volet disposé en aval du filtre à particules. La fermeture de ce volet réduit le débit pour créer ainsi des pertes par pompage au niveau du moteur tout en augmentant la charge du moteur, ceci pour diminuer l'apport d'oxygène au filtre.

L'invention a pour objet de détecter rapidement une telle régénération incontrôlée pouvant engendrer une dégradation irréversible du filtre, ceci afin d'informer le client, par exemple par le clignotement d'un voyant et/ou l'utilisation d'une synthèse vocale, d'un dysfonctionnement du système anti-pollution de son véhicule et d'inviter le client à faire contrôler ledit système.

### EXPOSÉ DE L'INVENTION

La présente invention concerne un procédé de détection de la régénération incontrôlée d'un filtre à particules implanté dans la ligne d'échappement d'un moteur à combustion interne, intervenant notamment lorsque la quantité de suies stockées dans ledit filtre est importante, caractérisé en ce que l'on détermine la quantité d'oxygène présent dans les gaz d'échappement en amont et en aval de ce filtre, on calcule la consommation d'oxygène due à la combustion des suies, et on compare cette consommation d'oxygène à un seuil pour déclarer le caractère violent ou non de la régénération.

Avantageusement, ledit procédé comporte :
- une étape de surveillance de la régénération du filtre à particules, grâce à la mesure ou l'estimation de la quantité d'oxygène en amont du filtre à particules et la mesure de la quantité d'oxygène en aval dudit filtre, en tenant compte :
   - de l'estimation de la masse de suies effectuée par le système de pilotage du filtre à particules, cette masse étant supérieure à une valeur de seuil ;
   - de la détection d'une régénération spontanée du filtre,
- une étape de surveillance de la régénération du filtre à particules tenant compte :
   - du pilotage de la régénération du filtre à particules par le calculateur,
   - d'une mesure ou d'une estimation de la quantité d'oxygène présente en sortie des cylindres du moteur,
   - d'une estimation de la consommation d'oxygène d'un catalyseur et/ou d'un piège NOx disposé en amont du filtre à particules,
- une éventuelle étape d'estimation de la consommation d'oxygène de la phase catalytique imprégnée dans les canaux du filtre à particules, qui reçoit une estimation de la quantité de réducteurs arrivant dans le filtre à particules,
- une étape de calcul de la consommation d'oxygène due à la combustion des suies,
- un test de comparaison de cette consommation d'oxygène à au moins un seuil de consommation, par exemple deux, de telle façon que :
   - si un premier seuil (seuil haut) est dépassé, on envoie un avertissement au conducteur d'avoir à faire contrôler le système de dépollution de son véhicule,
   - sinon, si un second seuil (seuil bas) est dépassé, on modifie le fonctionnement du moteur avec des réglages adaptés pour affaiblir la régénération et stopper l'emballement.

Il est également possible de passer par le second seuil puis par le premier.

Dans un premier mode de mise en oeuvre de ce procédé, on mesure la quantité d'oxygène en amont et en aval du filtre à particules.

Dans un deuxième mode de mise en oeuvre de ce procédé, on mesure la quantité d'oxygène en aval du filtre à particules, et on estime ou on calibre la quantité d'oxygène en amont du filtre à particules dans une ou plusieurs cartographies en fonction des paramètres moteurs, et du pilotage ou non de la régénération du filtre.

Dans un troisième mode de mise en oeuvre de ce procédé, on calibre la consommation d'oxygène d'un ou plusieurs catalyseurs d'oxydation ou d'un piège à NOx placés en amont du filtre à particules dans une ou plusieurs cartographies en fonction des paramètres moteurs et du pilotage ou non de la régénération du filtre, pour une prise en compte dans l'estimation de la quantité d'oxygène arrivant dans le filtre à particules.

Dans un quatrième mode de mise en oeuvre de ce procédé, la consommation d'oxygène de la phase catalytique, imprégnée au sein même du filtre à particules, est pré-calibrée dans une cartographie ou estimée en fonction des paramètres moteur afin d'en tenir compte lors de la comparaison de l'estimation de la consommation d'oxygène à un seuil précalibré.

L'invention s'inscrit dans les innovations qui conduisent actuellement au développement de systèmes de "post-traitement" de gaz d'échappement pour les moteurs fonctionnant en mélange pauvre et au diagnostic embarqué associé.

### BRÈVE DESCRIPTION DES DESSINS

La figure 1 illustre le schéma simplifié d'un filtre à particules.

La figure 2 illustre un organigramme global illustrant plusieurs variantes du procédé de l'invention.

Les figures 3 à 6 illustrent des modes de réalisation permettant de mettre en oeuvre les différentes variantes du procédé de l'invention.

### EXPOSÉ DÉTAILLÉ DE MODES DE RÉALISATION PARTICULIERS

Le procédé de l'invention est basé sur la mesure de la quantité d'oxygène dans les gaz d'échappement. En effet, l'oxygène est le paramètre le plus important dans l'emballement de la régénération d'un filtre à particules.

Le procédé de l'invention a ainsi pour objet de comparer les mesures ou estimations des quantités d'oxygène en amont et en aval du filtre lorsqu'une régénération spontanée ou pilotée survient tandis que la masse de suies stockées est importante, de calculer la consommation d'oxygène due à la combustion de suies et de comparer la consommation d'oxygène à un seuil pré-calibré, pour déclarer le caractère violent ou non de la régénération et prendre une décision.

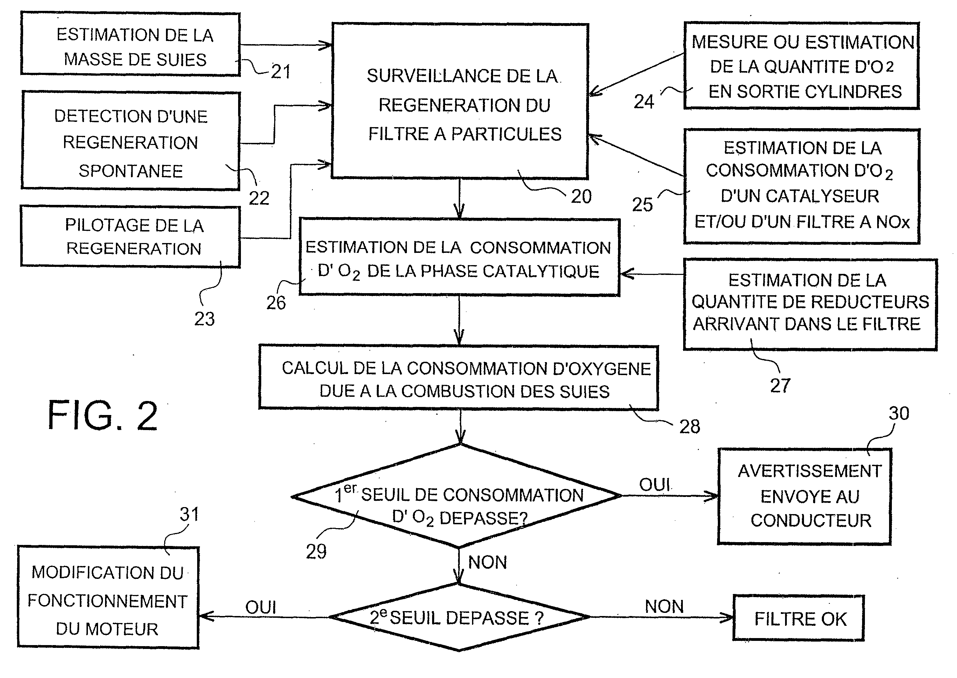

La figure 2 est un organigramme global illustrant différentes variantes du procédé de l'invention.

Ce procédé comporte ainsi :
- une étape 20 de surveillance de la régénération du filtre à particules, qui permet de connaître la mesure ou l'estimation de la quantité d'oxygène en amont du filtre à particules : quantité_O₂_amontFàP = quantité_O₂_sortie_ cylindres - conso_O₂_amontFàP, et la mesure de la quantité d'oxygène en aval du filtre à particules : quantité_O₂_avalFàP, en tenant compte :
   - de l'estimation 21 de la masse de suies M effectuée par le système de pilotage du filtre à particules, cette masse étant supérieure à une valeur de seuil M seuil, tel que M > M seuil ;
   - de la détection 22 d'une régénération spontanée du filtre,
   - du pilotage 23 de la régénération du filtre à particules par le système de régénération,
   - d'une mesure ou d'une estimation 24 de la quantité d'oxygène présente en sortie des cylindres du moteur, dénommée quantité_O₂_sortie_cylindres,
   - d'une estimation 25, si besoin selon la configuration échappement, de la consommation d'oxygène d'un catalyseur et/ou d'un piège NOx disposé en amont du filtre à particules, dénommée conso_O₂_amont FàP,
- une étape 26 d'estimation de la consommation d'oxygène de la phase catalytique (si besoin) pouvant être imprégnée dans les canaux du filtre à particules : conso_O₂_phase_catalytique_FàP qui reçoit une estimation 27 de la quantité de réducteurs arrivant dans le filtre à particules,
- une étape 28 de calcul de la consommation d'oxygène due à la combustion des suies telle que : conso_O₂_combustion_des_particules = quantité_O₂_ amontFàP - conso_O₂_phase catalytique_FàP-quantité_ O₂_avalFàP,
- un test 29 de comparaison de cette consommation d'oxygène à au moins un seuil de consommation, par exemple deux en effectuant alors la comparaison de conso_O₂_combustion_des_particules à deux seuils conso_O₂_seuil_haut et conso_O₂_seuil_bas, qui permet alors :
   - si le premier seuil (conso_O₂_seuil_haut) est dépassé, d'envoyer un avertissement (30) au conducteur d'avoir à faire contrôler le système de dépollution de son véhicule,
   - sinon, si le second seuil (conso_O₂_seuil_bas) est dépassé, de modifier le fonctionnement du moteur 31 avec des réglages adaptés pour affaiblir la régénération et stopper l'emballement ; le second seuil étant inférieur au premier seuil.

Il est également possible de passer tout d'abord par le second seuil puis par le premier seuil.

L'avantage principal du procédé de l'invention est de réduire le temps de détection d'une régénération incontrôlée, ce qui permet, si nécessaire, de réagir plus rapidement. En effet, la température en aval du filtre à particules n'est qu'une image retardée d'une régénération incontrôlée alors que la différence de quantité d'oxygène amont-aval du filtre à particules permet de détecter aussitôt la combustion anormale des suies au sein du filtre, grande consommatrice d'oxygène.

Dans une première variante du procédé de l'invention on utilise deux sondes de détection de la quantité d'oxygène implantées respectivement en amont du filtre, pour délivrer un signal dénommé : quantité_O₂_amontFàP, et en aval du filtre pour délivrer un signal dénommé : quantité_O₂_avalFàP.

Dans une deuxième variante du procédé de l'invention, on estime ou on calibre la quantité d'oxygène en amont du filtre à particules (quantité_O₂_amontFàP) dans une cartographie en fonction de paramètres moteur, notamment le fait d'être en phase de régénération pilotée par le calculateur, et on utilise une sonde de détection de la quantité d'oxygène en aval du filtre à particules.

Dans une troisième variante du procédé de l'invention, on calibre la consommation d'oxygène d'un ou plusieurs catalyseurs d'oxydation ou d'un piège à NOx placés en amont du filtre à particules (conso_O₂_amontFàP) dans une cartographie en fonction de paramètres moteur, notamment le fait d'être en phase de régénération pilotée par le calculateur, pour être prise en compte dans l'estimation de la quantité d'oxygène (quantité_O₂_amontFàP) arrivant dans le filtre à particules.

Dans une quatrième variante du procédé de réalisation, on pré-calibre la consommation d'oxygène (conso_O₂_phase_catalytique_FàP) de la phase catalytique pouvant être imprégnée au sein même du filtre à particules dans une cartographie, notamment le fait d'être en phase de régénération pilotée par le calculateur, ou on estime celle-ci en fonction de paramètres moteur, afin d'en tenir compte lors du calcul de la consommation d'oxygène due à la combustion des suies : conso_O₂_combustion_des_particules.

Le procédé de l'invention permet de détecter rapidement une régénération incontrôlée et d'agir, selon le roulage en cours, d'une manière transparente pour le conducteur, afin de stopper l'emballement ou tout du moins diminuer la "violence" de la régénération, notamment en diminuant l'apport d'oxygène en amont du filtre par des réglages adaptés du moteur.

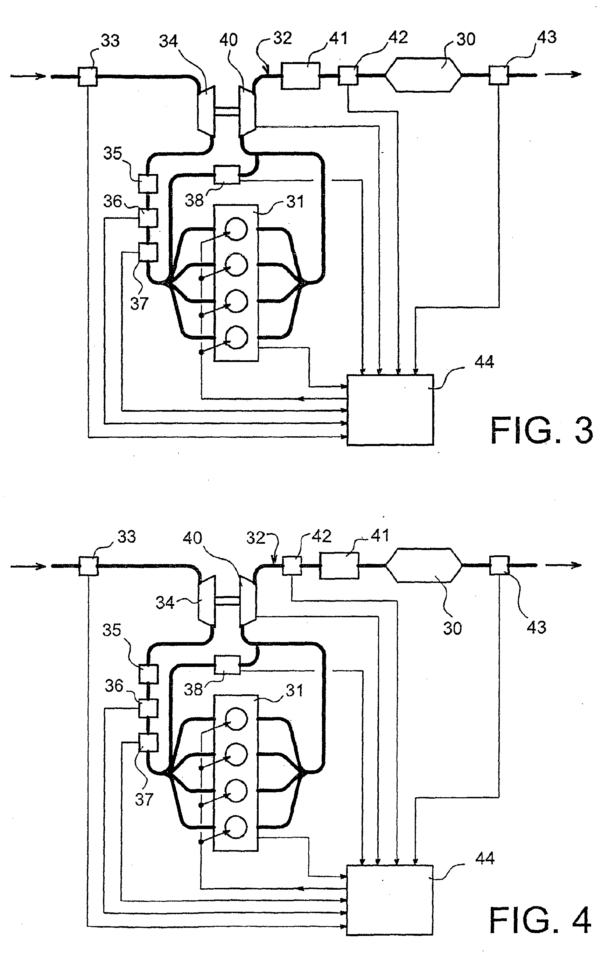

Les figures 3 à 6 illustrent différents modes de réalisation d'une ligne d'échappement d'un moteur à combustion interne permettant de mettre en oeuvre les différentes variantes du procédé de l'invention.

Sur ces figures est représentée la structure générale d'un système de gestion du fonctionnement d'un filtre à particules 30 associé à un moteur 31 de véhicule automobile et placé dans la ligne d'échappement 32 de celui-ci.

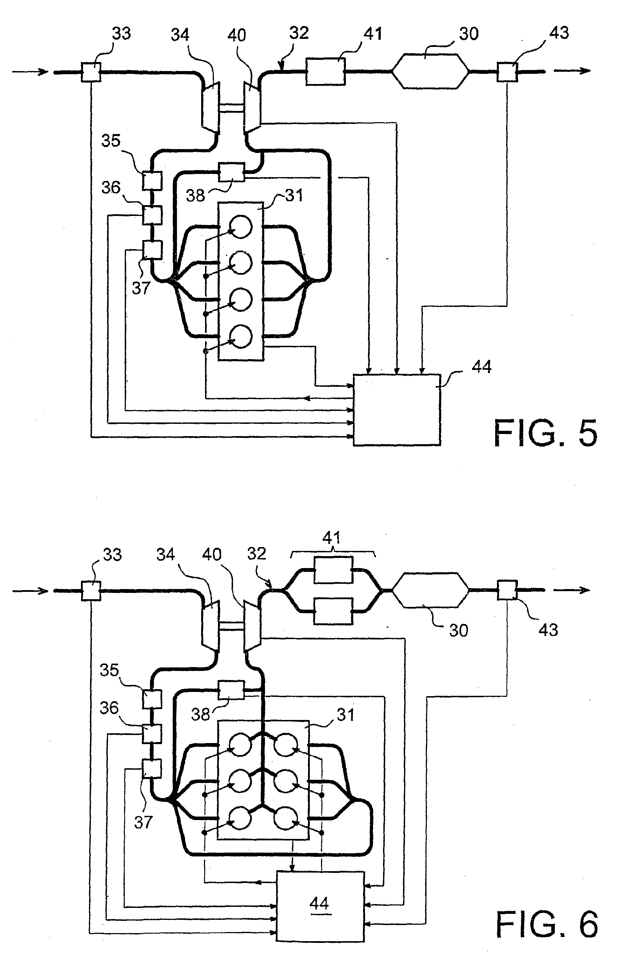

De façon classique, le moteur quatre cylindres (figures 3, 4 et 5) ou V6 (figure 6) 31 est alimenté en air à travers une conduite d'arrivée d'air munie d'un débitmètre 33. Cet air traverse ensuite la portion de compresseur 34 d'un turbocompresseur. L'air traverse ensuite un échangeur d'air de suralimentation 35, un capteur de la pression de suralimentation 36, et un capteur de température d'air d'admission 37.

Le moteur 31 est équipé d'une vanne EGR et d'un échangeur de type EGR, référencés 38.

En sortie de ce moteur 31, les gaz d'échappement traversent la portion de turbine 40 du turbo-compresseur avant de s'engager dans le reste de la ligne d'échappement 32 du véhicule.

Cette ligne d'échappement 32 est équipée d'un catalyseur d'oxydation ou d'un piège à NOx, référencés 41, en amont du filtre à particules 30.

Les différents capteurs équipant le moteur, sont reliés à un calculateur électronique 44 de traitement d'informations, qui pilote les injecteurs associés aux cylindres du moteur 31. Ce calculateur est également adapté pour assurer la gestion du fonctionnement de l'échappement et notamment celui du filtre à particules 30.

Les figures 3 à 6 illustrent, en outre, des éléments caractéristiques, nécessaires à la mise en oeuvre du procédé de l'invention :
- à la figure 3, deux sondes de mesure de la quantité d'oxygène 42 et 43 sont disposées de part et d'autre du filtre à particules. Ce mode de réalisation permet de mettre en oeuvre les première et quatrième variantes du procédé de l'invention,
- à la figure 4 la première sonde de mesure de la quantité d'oxygène 42 est disposée en amont du catalyseur d'oxydation ou du piège à NOx 41. Ce mode de réalisation permet de mettre en oeuvre les première, troisième et quatrième variantes du procédé de l'invention,
- à la figure 5, il n'y a pas de première sonde de mesure de la quantité d'oxygène, seule la seconde sonde 43 est maintenue. Ce mode de réalisation permet de mettre en oeuvre les seconde, troisième et quatrième variantes du procédé de l'invention,
- à la figure 6 il n'y a pas de première sonde de mesure de la quantité d'oxygène, le catalyseur d'oxydation et le piège à NOx 41 sont disposés en parallèle, le moteur est un moteur de type V6. Ce mode de réalisation permet de mettre en oeuvre les seconde, troisième et quatrième variantes du procédé de l'invention.

### REFERENCES

[1] FR 2 774 421
[2] EP 0 632 189
[3] JP 8 284 643
[4] JP 62 126 218
[5] JP 8 170 522
[6] FR 2 774 424

## Revendications

1. Procédé de détection de la régénération incontrôlée d'un filtre à particules implanté dans la ligne d'échappement d'un moteur à combustion interne, intervenant notamment lorsque la quantité de suies stockées dans ledit filtre est importante, **caractérisé en ce que** l'on détermine la quantité d'oxygène présent dans les gaz d'échappement en amont et en aval de ce filtre, on calcule la consommation d'oxygène due à la combustion des suies, et on compare cette consommation d'oxygène à un seuil pour déclarer le caractère violent ou non de la régénération.

2. Procédé selon la revendication 1, qui comporte :
- une étape (20) de surveillance de la régénération du filtre à particules, qui permet de connaître la mesure ou l'estimation de la quantité d'oxygène en amont du filtre à particules et la mesure de la quantité d'oxygène en aval dudit filtre.
- une étape (28) de calcul de la consommation d'oxygène due à la combustion des suies,
- un test (29) de comparaison de cette consommation d'oxygène à au moins un seuil de consommation.

3. Procédé selon la revendication 2, dans lequel, dans le test (29) de comparaison, on compare la consommation d'oxygène à deux seuils de comparaison, tels que :
• si le premier seuil (conso_O₂_ seuil_haut) est dépassé, on envoie un avertissement (30) au conducteur d'avoir à faire contrôler le système de dépollution de son véhicule,
• sinon, si le second seuil (conso_O₂_seuil_bas) est dépassé, on modifie le fonctionnement du moteur (31) avec des réglages adaptés pour affaiblir la régénération et stopper l'emballement.

4. Procédé selon la revendication 2, dans lequel, dans le test (29) de comparaison, on compare la consommation d'oxygène à deux seuils de comparaison, tels que :
• si le second seuil (conso_O₂_seuil_bas) est dépassé, on modifie le fonctionnement du moteur (31) avec des réglages adaptés pour affaiblir la régénération et stopper l'emballement, à condition que le premier seuil (conso_O₂_seuil_haut) ne soit pas dépassé,
• sinon, si ce premier seuil est dépassé, on envoie un avertissement (30) au conducteur d'avoir à faire contrôler le système de dépollution de son véhicule.

5. Procédé selon la revendication 2, dans lequel l'étape (20) de surveillance de régénération du filtre à particules tient compte :
• du pilotage (23) de la régénération du filtre à particules,
• d'une mesure ou d'une estimation (24) de la quantité d'oxygène présente en sortie dès cylindres du moteur,
• d'une estimation (25), si besoin, de la consommation d'oxygène d'un catalyseur et/ou d'un piège NOx disposé en amont du filtre à particules.

6. Procédé selon la revendication 5, dans lequel l'étape (20) de surveillance de régénération du filtre à particules tient compte :
• de l'estimation (21) de la masse de suies effectuée par le système de pilotage du filtre à particules, cette masse étant supérieure à une valeur de seuil ;
• de la détection (22) d'une régénération spontanée du filtre.

7. Procédé selon la revendication 2 comprenant, préalablement à l'étape (28) de calcul de la consommation d'oxygène due à la combustion des suies, une étape (26) d'estimation de la consommation d'oxygène de la phase catalytique imprégnée dans les canaux du filtre à particules, qui reçoit une estimation (27) de la quantité de réducteurs arrivant dans le filtre à particules.

8. Procédé selon la revendication 1, dans lequel on mesure la quantité d'oxygène en amont et en aval du filtre à particules.

9. Procédé selon la revendication 1, dans lequel on mesure la quantité d'oxygène en aval du filtre à particules, et on estime ou calibre la quantité d'oxygène en amont du filtre à particules dans au moins une cartographie en fonction des paramètres moteurs et du pilotage ou non de la régénération du filtre à particules.

10. Procédé selon la revendication 1, dans lequel on calibre la consommation d'oxygène d'un ou plusieurs catalyseurs d'oxydation ou d'un piège à Nox placés en amont du filtre à particules dans une cartographie en fonction des paramètres moteurs pour une prise en compte dans l'estimation de la quantité d'oxygène arrivant dans le filtre à particules.

11. Procédé selon la revendication 1, dans lequel la consommation d'oxygène de la phase catalytique, imprégnée au sein même du filtre à particules, est pré-calibrée dans une cartographie ou estimée en fonction des paramètres moteur afin d'en tenir compte lors de la comparaison de l'estimation de la consommation d'oxygène à un seuil précalibré.

12. Moteur à combustion interne équipé d'un filtre à particules comprenant un calculateur destiné à mettre en oeuvre le procédé selon l'une quelconque des revendications précédentes.
